(19)

Europäisches Patentamt

European Patent Office

Office européen des brevets

(11) **EP 4 617 722 A1**

(12) **EUROPEAN PATENT APPLICATION**

(43) Date of publication:
**17.09.2025  Bulletin 2025/38**

(21) Application number: **24163051.6**

(22) Date of filing: **12.03.2024**

(51) International Patent Classification (IPC):
**G01S 13/42** *(2006.01)*     **G01S 13/53** *(2006.01)*
**G01S 13/931** *(2020.01)*     **G01S 13/60** *(2006.01)*
**G01S 13/58** *(2006.01)*

(52) Cooperative Patent Classification (CPC):
**G01S 13/42; G01S 13/53; G01S 13/584;**
**G01S 13/588; G01S 13/60; G01S 13/931;**
G01S 7/356

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Aptiv Technologies AG**
**8200 Schaffhausen (CH)**

(72) Inventors:
• **BECKER, Adrian**
  **2939 Schaffhausen (CH)**
• **LESSMANN, Stephanie**
  **2939 Schaffhausen (CH)**
• **IURGEL, Uri**
  **2939 Schaffhausen (CH)**

(74) Representative: **Lewis Silkin LLP**
**Arbor**
**255 Blackfriars Road**
**London SE1 9AX (GB)**

(54)   **RADAR PROCESSING METHOD AND APPARATUS**

(57)     Method and apparatus for processing radar signals. A plurality of radio waves reflected from at least one object are received (201) at an antenna array. Each of the plurality of reflected radio waves are processed (203) to determine the range from the antenna array to the at least one object. Each of the plurality of processed radio waves are adjusted (205) based on an azimuth value corresponding to an angle of incidence of the reflected radio wave, and the motion of the antenna array. Each of the plurality of adjusted processed radio waves are filtered (207) through a hierarchical filter bank comprising a plurality of filters to receive a plurality of output images representing the motion of the object.

201 → Receiving, at an antenna array, a plurality of radio waves reflected from at least one object

203 → Processing each of the plurality of reflected radio waves to determine the range from the antenna to the at least one object

205 → Adjusting each of the plurality of processed radio waves based on an azimuth value corresponding to an angle of incidence of the reflected radio wave, and the motion of the antenna array

207 → Filtering each of the plurality of adjusted processed radio waves through a hierarchical filter bank comprising a plurality of filters to receive a plurality of output images representing the motion of the object

Figure 2

EP 4 617 722 A1

**Description**

<u>Field</u>

The present disclosure relates to a method of radar signal processing, a processing unit, a vehicle and a computer program product for the same. The present disclosure is particularly relevant to automotive radar. The present disclosure concerns the processing of frequency modulated continuous wave radar signals used in automotive environment sensing. The disclosure is relevant to advanced driver assistance systems and autonomous driving technologies.

<u>Background</u>

Classical signal processing in automotive radar typically uses point target processing, that results in a detection list being reported by the radar, providing point targets in space from where reflected radio waves sent by the radar antenna have been detected.

In recent years, radar hardware has become cheaper, and has been developed with better imaging capabilities. However, the signal processing used by this new hardware still reduces large maps, such as range-Doppler maps, to point targets in the form of detection lists. This leads to information loss as a large amount of input radar data is processed to produce a relatively small amount of usable information in the output detection lists.

In classical applications, radar data is usually processed by applying thresholds (commonly referred to as continuous false alarm rate or CFAR), and peak-extraction-methods, to extract detection candidates on range doppler maps. Assuming an array of antennas (typically in a multiple-in multiple-out MIMO configuration in an automotive environment), the incident angle of the scatterers causing the peaks in range-doppler need to be determined. This is done by analysing the spatial frequencies measured by the array. This leads to a list of detections which are spatially resolved in range and angle, and which may also include some features like amplitude and the range-rate of the scatterer. This processing gives sparse information about the major reflectors in the vicinity.

There therefore is a need to improve radar processing, particularly in the automotive field. That is, even though the capabilities of radar hardware allow for the capture of a large amount of data, the amount of information that is retained after processing is relatively small. In addition, some applications require a denser perception of the environment, and as such image-like processing of the radar data would be greatly beneficial.

However, processing of the radar data to produce image-like information in a naive way, i.e., using classical radar processing, would require handling with large sized 3D arrays, which are sparsely calculated in one or more dimensions to minimise computing power and memory, at the cost of discarding information.

There is therefore a need to improve radar processing such that a larger amount of available information is retained whilst still minimising computing power and memory.

<u>Summary of Invention</u>

According to a first aspect of the invention, there is provided a method for processing radar signals, comprising: receiving a plurality of radio waves reflected from at least one object and received at an antenna array; processing the plurality of radio waves to determine the range from the antenna array to the at least one object; adjusting each of the plurality of radio waves based on an angle of incidence of the reflected radio wave, and the motion of the antenna array; and filtering each of the plurality of adjusted processed radio waves through a hierarchical filter bank comprising a plurality of filters to receive a plurality of output images representing the motion of the object.

In this way, the adjusted and reflected radio waves are passed through a set of cascaded filters such that doppler features, which provide information on the range rate of one or more detected objects, can be measured with a greater time resolution and without discarding any information. Further, the Doppler information can be extracted on the basis of subsets of chirps, instead of reducing a plurality of chirps to a single doppler value. Because the range, AoI and Doppler components of the reflected chirps are extracted, images representative of the whole motion of the object(s) are provided. The images comprise 3D data with axes: (1) range, (2) angle, and (3) complex valued (usually) Wavelet coefficients resulting from the filtering of the filter bank. Further still, processing of the data is carried out efficiently, in contrast to classical processing, as the time complexity of the filtering process is proportional to the amount of data, compared to the logarithmic relationship of, for instance, fast Fourier transforms, and the squared relationship of discrete Fourier transforms used in conventional radar processing. With the claimed invention, by extracting the doppler information from the range processed and angle and ego-motion adjusted radio waves, the location and velocity of an object can be determined relative to the motion of the antenna array. Thus, a more efficient radar processing method may be provided, which can make better use of the capabilities of the radar system. The angle of incidence (AoI) may refer to Azimuth, Elevation or both.

In embodiments the plurality of adjusted processed radio waves are filtered to identify a plurality of adjusted processed radio waves associated with one or more detected objects, and filtering the plurality of adjusted processed radio waves through a hierarchical filter bank comprises filtering the identified plurality of adjusted processed radio waves through the hierarchical filter bank.

In this way, not all of the adjusted processed radio waves are filtered using the hierarchical filter bank. For instance, some of the reflected radio waves are not associated with an object for detection. These may be particularly weak reflected radio waves and represent noise in the system. The filtering can remove this noise by focusing on maxima in the adjusted processed radio waves. The hierarchical filtering in turn is not carried out on this noise reducing inefficiencies in the system.

In embodiments, filtering the plurality of adjusted processed radio waves through a hierarchical filter bank comprises passing each of the plurality of adjusted processed radio waves through a hierarchy of band-pass filters of decreasing frequency and decreasing bandwidth.

In this way, velocity information can be extracted from the adjusted reflected radio waves in an ordered manner and over different frequency resolutions based on the velocity of the object. In particular, at higher doppler frequencies more information is provided due to the higher bandwidth of the band-pass filter.

In embodiments, filtering the plurality of adjusted processed radio waves through a hierarchical filter bank comprises applying a discrete wavelet transform to each of the plurality of adjusted processed radio waves.

In this way, use of a wavelet transform applied to the signal functions as a hierarchical filter-bank. This avoids the requirement to specify the filters of the filter bank individually, because the natural transform and scaling of the transform generates a plurality of filters which each reduce in bandwidth by half as they descend the frequency scale, down to a low-pass filter which forms the final filter and stretches between 0Hz and the starting frequency of the lowest band-pass filter.

In embodiments, the discrete wavelet transform is applied using a Haar wavelet.

In this way, a square type wavelet family can be used to apply the discrete wavelet transform. In particular, by using the Haar wavelet transform, the filtering is even more simplified as no multiplications are needed for the analysis, and instead it can be realized by addition and subtraction. This therefore simplifies processing of the signal.

In embodiments, the hierarchical filter bank is applied to the adjusted processed radio waves for a temporal portion of the complete adjusted processed radio wave.

In this way, time information from the radio waves is retained, as the transform is applied to a time window in the radio wave and so it is known that the output of the filter-bank corresponds to a certain time in the received signal. This may therefore increase the time resolution of the output, retaining more of the information available from the reflected radio waves.

In embodiments, processing each of the plurality of reflected radio waves to determine the range value comprises applying a Fourier transform to the reflected radio waves.

In this way, by applying a range FFT, the range of a plurality of objects can be determined by the reflection of radio waves, and differing ranges of multiple objects can be determined easily and intuitively.

In embodiments, adjusting each of the plurality of reflected radio waves based on the angle of incidence comprises decorrelating the transmitters of the antenna array to derive a representation of the virtual array of the antenna array and applying a second Fourier transform to each of the processed radio waves.

In this way, the angle of arrival of the radio waves can be determined from the change in frequency which occurs due to the stretching of the incident radio wave over the antenna array. The angle is measured by the phase shift of the incident radio waves across the antenna array. The Fourier transform applied here is referred to as an angle FFT.

In embodiments, each of the output images comprises the output of a filter of the hierarchical filter-bank, and each filter of the hierarchical filter-bank corresponds to a particular interval of doppler values.

In this way, the velocity of one or more detected object is derivable to comprise the output image representative of motion of the object(s). The filter of the filter-bank which passes the signal corresponds to an interval of doppler values of that radio wave. As such the exact doppler value does not need to be measured from the signal, such as can be carried out in conventional radar processing using a Fourier transform. By interval of doppler values, it will be understood that the bandwidth of each filter level encompasses a range of Doppler values, and that the response in a given filter level represents a Doppler value within that range or interval of doppler values. That is, a response in a filter level indicates a response between doppler value n and doppler value m.

In embodiments, the method further comprises determining the velocity of the one or more objects by determining which of the filter outputs yields a highest response value for a particular time window for each adjusted processed radio wave.

In this way, by determining the particular frequency band which passes the signal with the highest norm it is possible to determine the interval of doppler values corresponding to the received signal, and as such the rough (or interval of) velocity of one or more objects is derived.

In embodiments, the method further comprises reconstructing the at least a portion of the processed adjusted radio waves from the one or more determined filter outputs and performing a frequency analysis on the reconstructed processed adjusted radio wave.

In this way, the doppler frequencies for the radio wave can be determined to reconstruct the exact doppler value at a particular time. This is particularly helpful when the output of the hierarchical filter bank has less resolution than is required for the application, and also can be used to determine the rate at which the object is accelerating.

In embodiments, the method further comprises applying the hierarchical filter bank to at least one of the adjusted reflected radio waves for a plurality of sequential temporal periods.

In this way, the change of doppler over time can be monitored to determine the acceleration of a detected object. This is in contrast to classical radar processing where a Fourier transform is used to determine the rate of one or more objects, as there is no time information associated with the transformed frequency response. That is, the present invention allows derived doppler values to be calculated for different times and time spans in a reflected radio wave. By calculating more than one Doppler value for the same reflected radio wave, and therefore object differences in doppler value can be measured. This is not possible in classical processing because the entire chirp, and indeed multiple chirps, are analysed with a single transform.

In embodiments, the method further comprises, as a first step applying the hierarchical filter bank to one of the adjusted reflected radio waves and storing the corresponding output image as a data array, and, as a second step applying the hierarchical filter bank to a subsequent adjusted reflected radio wave and adding the corresponding output image to the data array.

In this way, the processing of the chirps and the memory required is optimized, as only the current chirp and the final output structure (e.g., the radar data-cube) need be held in memory at any one time. As each of the angle and range FFT and the hierarchical filtering can be done on a chirp-by-chirp basis, contrary to classical processing which applies a doppler FFT to all values in a particular range (i.e., across multiple chirps), the memory requirement of the present invention is substantially smaller.

According to a second aspect of the invention, there is provided a radar unit comprising a radar antenna array and a processor, the processor configured to carry out the method according to any of the above method statements. In this way a radar unit may be provided for implementing the above method. It will be understood that the processing unit may be provided as a multidomain controller or other automotive electronic control unit. According to a further aspect, there is provided an electronic control unit comprising a processor configured to carry out the method according to any of the above method statements. In embodiments, the electronic control unit is a multidomain controller.

According to a third aspect of the invention, there is provided a vehicle comprising the radar unit described above. The invention is particularly suited to automotive applications as it allows detection of multiple moving objects and compensates for movement of the radar antenna array.

According to a fourth aspect of the invention, there is provided a non-transient computer readable medium comprising computer program instructions which, when carried out by a processor connected to a radar antenna array, cause the processor to carry out the method according to any of the above method steps.

## Brief Description of Drawings

Illustrative embodiments will now be described with reference to the drawings in which:

Figure **1** shows a visualisation of a classical processing method for RADAR sensor data;
Figure **2** shows a visualisation of a processing method for RADAR sensor data according to an illustrative embodiment of the present invention;
Figure **3a** shows a first representation of a hierarchical filter-bank according to an illustrative embodiment of the present invention;
Figure **3b** shows an alternative representation of a hierarchical filter bank according to an illustrative embodiment of the present invention;
Figures **4a** and **4b** show respectively the mother wavelet and the scaling function of a Haar wavelet according to an illustrative embodiment of the invention;
Figure **5** shows an illustration of a fast time and slow time dimension of a radar data cube according to an illustrative embodiment of the invention;
Figures **6a** to **6c** show a visualisation of a filter output for a plurality of objects at different velocities;
Figure **7** shows a visualisation of a method of calculating the rate of change of doppler according to an illustrative embodiment of the present invention.
Figure **8** shows a visualisation of a method of reconstructing doppler values according to an illustrative embodiment of the present invention.

## Detailed Description

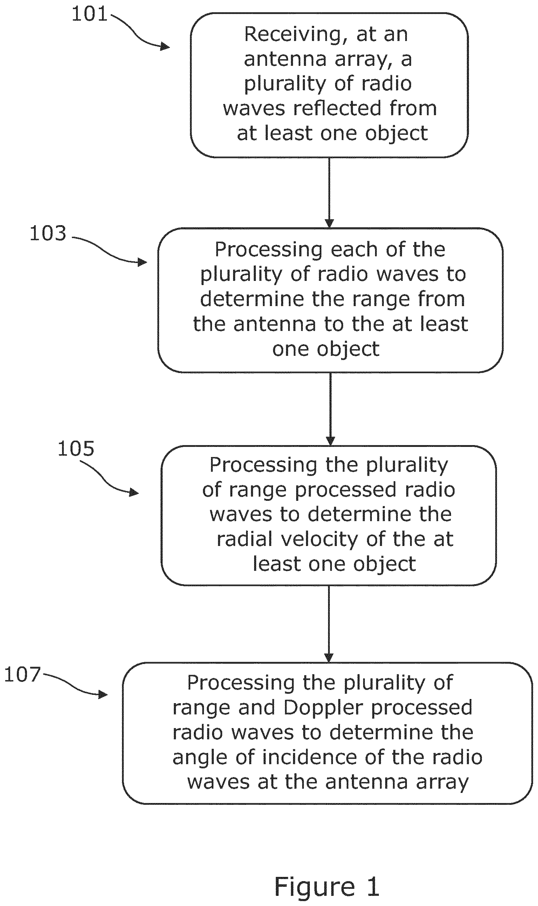

In Figure **1** a classical method of processing radar signals reflected from an object is set out for background understanding of the invention. At step 101, reflected radio waves are received at an antenna array from an object or objects. These objects can be considered to be "detected" by the radar antenna array. The radio waves take the form of a "chirp" or a frequency modulated wave that has an increasing frequency over a time window. In practice, the radar antenna transmitter transmits a repeated series of chirps which reflect back from a number of objects, and are received in an attenuated form and after different periods of time at the radar antenna receiver.

At step 103, the reflected radio waves are processed first to determine the range to any objects detected by the radar antenna receiver. This can be achieved by applying a fast Fourier transform (the "Range FFT") to each received chirp to determine the difference in frequencies between the sent and received chirp at a point in time (the "beat frequency"). This sorts the objects detected in each chirp into a "range bin", which does not distinguish between objects at the same range.

At step 105, the range bins are then processed to determine the velocity of the objects detected by applying another fast Fourier transform to each range bin (the "Doppler FFT"). This essentially derives the phase difference of all the received signals to determine the change of rate of the chirp and thus determine the presence of the Doppler effect on the received signal compared to the send signal. This indicates relative movement between the radar antenna array and the object(s) detected.

At step 107, the signal is processed a third time by applying a third fast Fourier transform (the "Angle FFT"). Each receive antenna of the radar antenna array receives signals which are independently processed according to the above steps. This therefore provides a range/doppler grid for each of the receive antennas. The angle FFT is taken across the range/doppler grids in a third, spatial (as opposed to time and frequency) dimension to generate a radar data-cube from which the range, velocity, and angle of a number of detected objects can be determined.

The data-cube is assembled in the following order. First each chirp is processed to assign detected objects into range bins. Secondly a plurality of chirps are processed to assign each of those objects into Doppler bins. This generates a 2D range-Doppler map for each receive antenna, and these maps or slices are then processed to determine the angle of each detected object.

With the above classical method of processing radar signals, range velocity and positioning data for the detected objects is provided, as well as resolving the detection of objects in 2D space. That is to say, at the first step, objects are detected by the reflection of radio waves which are out of synchronisation with the sent signals. However, if more than one object is detected at the same range, then they cannot be differentiated. At the second step, the velocity of each detected object is determined, and this then can differentiate between two objects at the same range having different velocities. However, two objects at the same range with the same velocity will still be unresolved. By also determining the angle of incidence, these objects can be differentiated from each other.

An issue with the above conventional processing method is that information is lost at each processing stage. In particular, the Doppler FFT reduces the frequency information of the received chirps to a single Doppler value across the samples, and the nature of the FFT means that time information of particular Doppler values at particular times is lost.

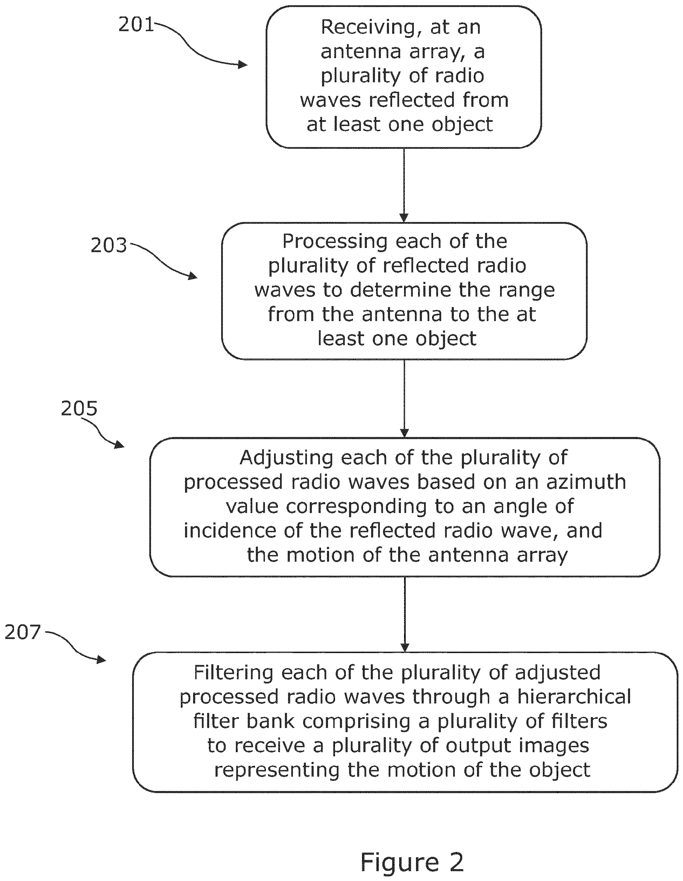

Referring now to Figure **2,** a novel form of processing is provided which retains as much of the information in the original data (i.e., the received radio wave) as possible - much more than is retained in the above conventional scenario, both in spatial and in time resolution. At the same time, very efficient processing may be achieved.

At step 201, as with step 101 of Figure **1,** reflected radio waves are received from one or more objects and, as such, the object (s) is detected by the radar array. At step 203, as with step 103, the range FFT is applied to the received chirps to determine the distance from the antenna array to each of the one or more detected objects.

In contrast to the remaining steps of Figure **1,** however, at step 205 the angle of incidence at the antenna array of each of the received chirps is determined. The skilled person will understand that a number of methods may be used to achieve this. In one example, the transmitter of the antenna array is decorrelated from the antenna array to derive the virtual array of the radar antenna array. From this, the angle FFT can be applied to the radar chirps received at each receiver of the antenna array. Instead of an angle FFT, frequency estimation may be used, as long as phase information of the reflected radio waves is retained.

At this stage the range and angle to the one or more detected objects has been determined. The velocity, direction and orientation of the antenna, and hence the vehicle, can be also determined using known measuring techniques, and therefore the effect of this "egomotion", along with the incidence angle, can be used to adjust or compensate the incoming chirps such that any resulting Doppler measurements are representative of the absolute speed of the one or more detected objects and not the speed relative to the antenna array. Hence, objects with the same relative radial velocity will be represented by similar frequencies in the frequency domain. This process is herein referred to as egomotion compensation.

At step 207, the egomotion compensation is performed, which can be efficiently expressed as a multiplication with a complex sinusoidal using the following identity of the Fourier transform:

$$F(\omega - \omega_o) = \mathfrak{F}\{e^{i\omega_o t} \cdot f(t)\} \ where \ \mathfrak{F}\{f(t)\}$$

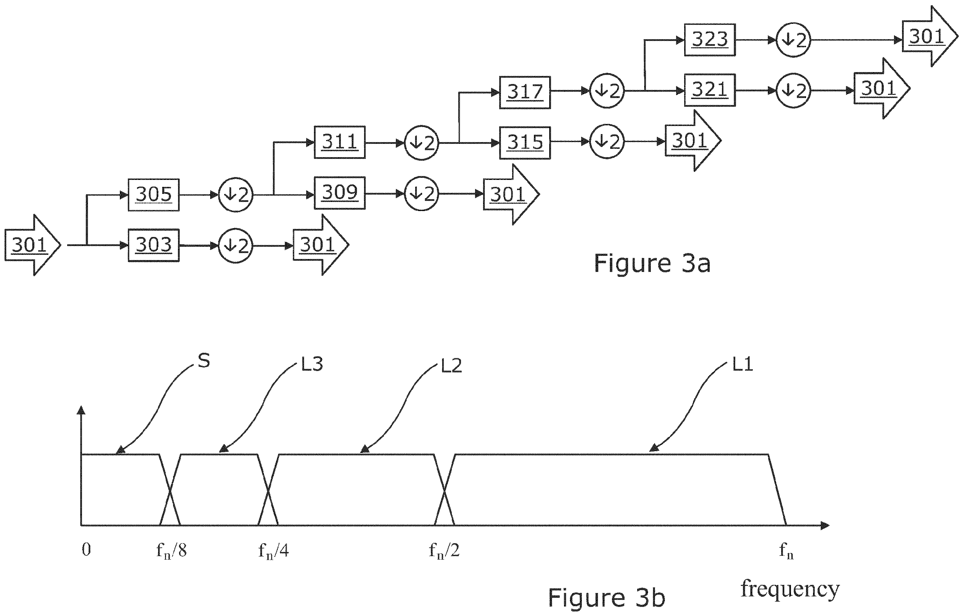

At step 209, the angle and egomotion adjusted range processed chirps are filtered through a Hierarchical filter bank. The Hierarchical filter bank is described with respect to Figure **3**.

As the range, velocity and angle have now been determined, the objects detected by the radar are suitably differentiated from one another, as in the classical example of Figure **1**.

In contrast to the data-cube assembly method described above, in the method according to an illustrative embodiment of the invention described in Figure **2,** again each chirp is processed to assign detected objects into range bins, however secondly the angle of incidence of the objects is determined and combined with the egomotion of the antenna to adjust the range processed chirps. Whereas in the above conventional example, slices of data are processed in the dimensions range then Doppler then angle, in the illustrative embodiment slices of data are processed in the dimensions range then angle, leaving the Doppler value unobtained at the first stage. These slices are herein referred to as range-azimuth-images.

Continuously processing range-azimuth-images, in contrast to the traditional range-doppler-maps, with a hierarchical filter bank can yield different images which represent Doppler features with varying time and frequency resolution.

In conventional Doppler processing, as set out above, a Doppler FFT is applied to all of the Range FFT samples in a particular range bin. This therefore requires the FFT to applied across multiple chirps. However, it has been appreciated by the present inventors that the received chirp at the antenna array for every detected object already contains Doppler information. Conventionally the change of phase of each chirp is monitored to determine the movement of the object between chirps, however by processing the chirps with a hierarchical filter bank the Doppler information within a single chirp is extracted.

Figure **3a** shows a first illustrative embodiment of a hierarchical filter bank.

In Figure **3a** the filter bank is represented by a set of cascaded filters with a single input for the input signal and a plurality of outputs from which Doppler coefficients are extracted.

The signal as described above, that is the range processed and egomotion compensated radar signal, is fed into the input 301 which is bifurcated such that the entire signal is passed through a first stage band-pass filter 303 and a first stage low-pass filter 305. The low-pass filter 305 essentially passes all of the signal which is not passed by the band-pass filter 303.

The nature of the Hierarchical filter bank is that the signal is split into two equal band-width portions by each band-pass filter. That is the signal is divided into two equal sized portions in the frequency domain, the higher frequency half being passed by the band-pass filter 303 and the lower frequency half being passed by the low-pass filter 305.

The output 307 of the first stage band-pass filter 303 is representative of the Doppler values, if any, present in the signal which are reflected from an object moving at a particular rate. Each frequency band or filter output corresponds to a particular interval of Doppler values. As such, if there is a response present in the output 307 of the first stage band-pass filter 303 then there is a Doppler effect produced by an object detected at the radar which corresponds to the Doppler value associated with the first stage band-pass filter 303. As will be seen later, there may be a Doppler response in multiple filter windows.

In the case of the Hierarchical filter bank according to the illustrative embodiment of the present invention, the higher the frequency band in which the Doppler response is present, the greater the speed of the object detected (with respect to the egomotion of the antenna as set out above).

With reference to the velocity of the detected object, it will be appreciated that due to the presence of the azimuth value in the range-azimuth-images which are processed, the velocity detected is the absolute velocity of the object and not the relative of radial velocity.

The outcome of the first stage low-pass filter 305 is then bifurcated again and the signal is passed through a second stage band-pass filter 309 and a second stage low-pass filter 311. This again splits the low frequency window from the first stage into two equally sized frequency portions. Each filter window is half the size of the previous stage filter window. The output 313 of the second stage band-pass filter provides a second set of Doppler coefficients which correspond to the Doppler response associated with the second stage band-pass filter 309.

In turn, the output 313 of the second stage band-pass filter 309 is bifurcated and passed through a third stage band pass filter 315 and a third stage low-pass filter 317 with the output being taken from the third stage band-pass filter 315 and the output 319 of the third stage band-pass filter 315 provides a third set of Doppler coefficients which correspond to the Doppler response associated with the third stage band-pass filter 315.

In the illustrative embodiment of Figure **3** the output 319 of the third stage low-pass filter is passed to an nth stage band-pass filter 321 and nth stage low-pass filter 323. The nth stage represents the final stage of the Hierarchical filer-bank. The output 325 of the nth stage band-pass filter 321 provides an nth set of Doppler coefficients, and the output 327 of the nth stage low-pass filter 323 is not passed to a further stage, but also provides an n+1th set of Doppler coefficients which relate to the lowest frequency band differentiated by the filter-bank. As the speed of the detected object(s) decreases through the stages the output 327 of nth stage low-pass filter 323 corresponds to stationary or nearly stationary objects.

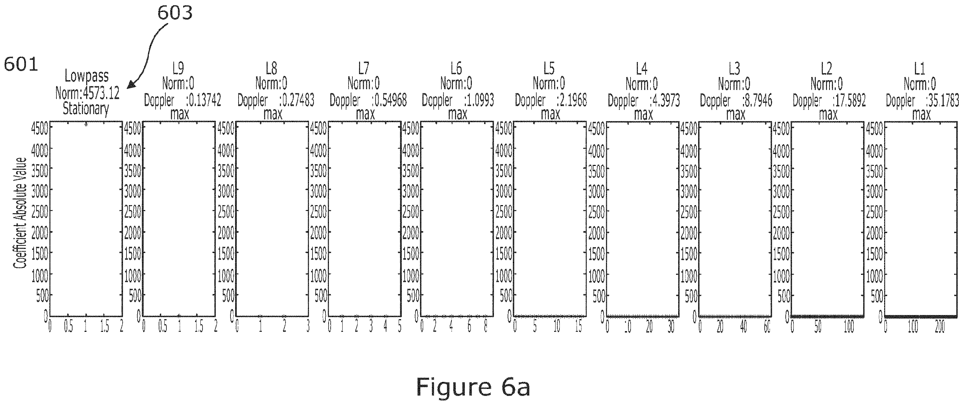

In the exemplary filter output described with reference to Figures **6a** to **6c** nine stages are envisaged, with the output of the ninth stage providing, from the ninth stage band-pass filter, the level nine Doppler coefficients, and from ninth stage low-pass filter, the stationary Doppler coefficients (i.e. in the above example the n+1th set of Doppler coefficients). Of course, the number of filters in the Hierarchical filter bank can be tailored to suit the particular application.

In Figure **3b** the filter bank is represented as a plurality of band-pass filter windows L1 to L3 and a low-pass filter S. These correspond to the output of the cascade shown in Figure **3a**. It can be seen that each filter window touches the adjacent window such that the entire frequency spectrum is covered by the Hierarchical filter bank.

The signal passed by the window L1 corresponds to the fastest objects detected by the radar antenna receiver, and as the frequency windows translate further down the frequency spectrum the Doppler responses correspond to slower objects. The signal passed by the window S corresponds to stationary or nearly stationary objects. It will be also appreciated that the window s represents a low-pass filter as it is bounded on the low frequency side by the origin, or 0Hz.

The markings at the intersection of the frequency windows L1 to S demonstrate the f/2 relationship of the size and translation of the frequency windows. The upper limit of the L1 frequency window is bounded by $f_n$, and the lower limit of the L1 frequency window, and upper limit of the L2 frequency window is bounded by $f_n/2$. The lower limit of the L2 frequency window, and upper limit of the L3 frequency window is bounded by $f_n/4$, and so on.

In an illustrative embodiment of the present invention the Hierarchical filter-bank is realised by the application of a wavelet transform onto the range-azimuth images. A wavelet filter operates by comparing a mother waveform to the signal for processing to examine similarity between the waveform and the signal. The wavelet provides a scalable window which can be applied to the signal, which can be shifted across the signal to provide time-frequency representations of the signal. The design of the filter-bank, including the derivation of the wavelet function, is a non-trivial task as the interpretation of the "frequencies" contained in the images depend strongly on the choice of the mother filters.

In an illustrative embodiment of the present invention a Haar wavelet is used. The Haar wavelet is defined by the functions:

$$\varphi_{j,k}(t) = \sqrt{2}^j \varphi\big(2^j t - k\big), \psi_{j,k}(t) = \sqrt{2}^j \varphi\big(2^j t - k\big) \ with \ j, k \in \mathbb{Z}$$

with respect to a mother wavelet described as:

$$\psi(t) = \varphi(2t) - \varphi(2t + 1) = \begin{cases} 1, 0, \le t < \dfrac{1}{2} \\ -1, \dfrac{1}{2} \le t < 1 \\ 0, otherwise \end{cases}$$

and a scaling function, or father wavelet, described as:

$$\varphi(t) = \begin{cases} 1, 0 \le t < 1 \\ 0, otherwise \end{cases}$$

The sets $\Psi_j = \{\psi_{j,k}\}_{k\in\mathbb{Z}}$ , $\Phi_j = \{\varphi_{j,k}\}_{k\in\mathbb{Z}}$ form the Haar scaling and wavelet basis functions of level $j$.

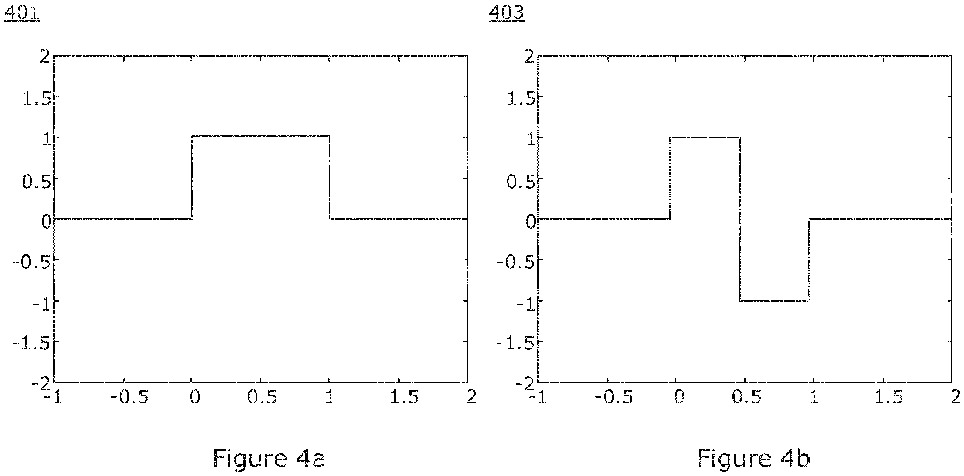

A graphical representation of the Haar wavelet function is provided in Figures **4a** and **4b**. Figure **4a** shows the scaling function as plot 401 and figure **4b** shows the mother wavelet as plot 403.

In implementation of the Haar discrete wavelet transformation the analysis is done successively by filtering the signal by $\frac{1}{\sqrt{2}}[1, -1]$ and $\frac{1}{\sqrt{2}}[1,1]$ , and downscaling at each level which results in an efficient cascaded analysis of the signal.

This means that for the Haar wavelet transform the implementation is simplified with respect to a general wavelet transform, as no multiplications are needed for the analysis and it can be realized by addition and subtraction. Using the Haar functions the frequency components of the signal can be analysed for different time spans, where the wavelet coefficient is related to the phase difference of the current signal time span. A Haar wavelet basis function of a specific level has the highest correlation with the phase progression of a specific doppler value. Thus, by analysing the range-azimuth-images with the Haar wavelet, the coefficients are directly related to the Doppler.

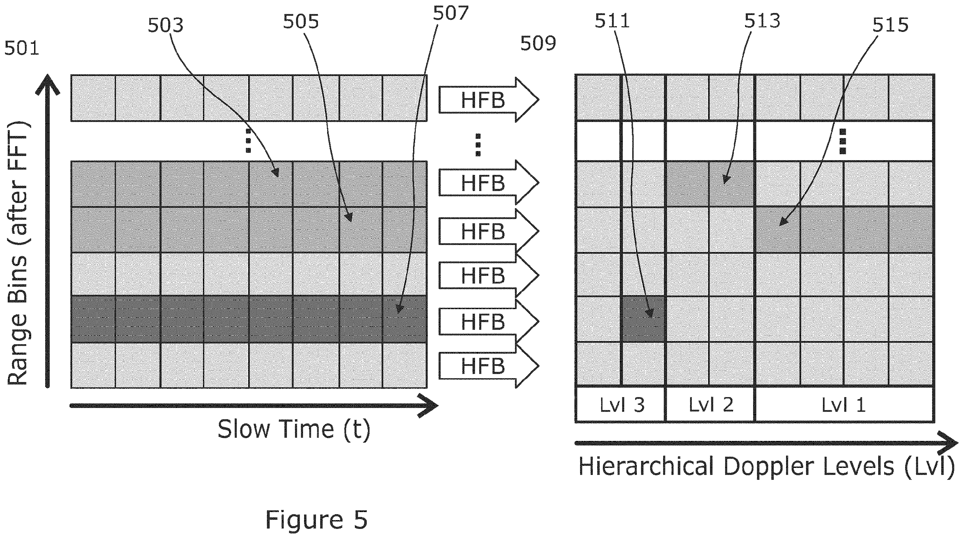

Figure **5** shows the application of the filtering process to the range binned chirp samples across a slow time dimension of the radar data-cube. The representation 501 of the data cube shows a number of chirps to which a range FFT has been applied. The rows in the data cube 503, 505 and 507 represent range values for where an object has been detected by the radar, which are not resolved for rate. Figure **5** is a 2D representation of a 3D data cube, where an azimuth dimension is not shown. The representation can be considered to be taken as a slice of the 3D data cube, such as a slice representing the maximum azumth bin.

The representation 509 shows the same data cube face after the hierarchical filtering process via the wavelet function has been applied. The filtering resolves the range processed chirps into Doppler bins 511, 513 and 515 which are based on the filter output level at which the Doppler response was detected. Due to the downscaling at each level, the number of output coefficients at each level becomes halved, as can also be seen in Figures **6a** to **6c.**

In constructing the data cube represented in representation 509, the processor of the radar data can build the data cube on a chirp by chirp basis, and not, as in classical processing, by applying a Doppler FFT across each range bin over a number of chirps. This means that instead of storing a number of samples and then constructing the data cube, or at least the range-Doppler map, the processor can simply store the current range-azimuth-image and apply the wavelet transform to the stored image, and add this to the final data cube face. Thus processing and memory usage is lower than in classical radar signal processing, and a reaction time for already processed levels is faster. In particular, in the above described processing, however, it is possible to start processing of the higher Doppler levels as soon as the first chirps are received at the antenna receiver. In contrast, classical processing requires that all radar chirps are received before processing can begin. An implementation of the filter bank in a delay-and-sum-manner allows for processing of one image at a time while the next chirps are sampled. Thus, only one range-azimuth-image at a time plus the final output structure needs to be held in memory.

In Figures **6a** to **6b** filter outputs of the different stages or levels of the hierarchical filter-bank are shown. In this illustrative embodiment the filter bank comprises

Figure **6a** shows an output of the filtering process 601 on a range-azimuth-image representative of an object which is stationary. As can be seen there is a strong response with a norm of over 4500 for the filter output Lowpass and no response for any of the other filter outputs. Referring to the description of Figure **3a** above, the output of the low-pass filter 603 provides a Doppler coefficient which corresponds to the Doppler response, in this case 0, passed by the low-pass filter.

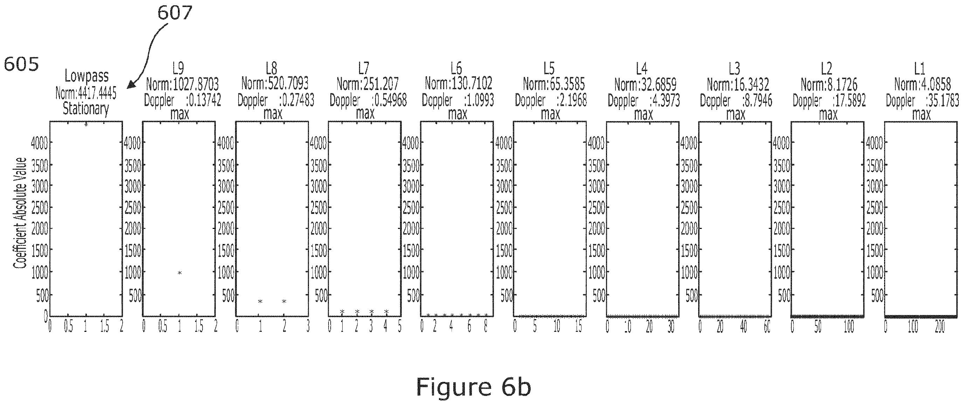

Figure **6b** shows an output of the filtering process 605 on an almost stationary object, travelling at 0.02m/s. It can be seen that the Doppler response is strongest in the low-pass filter window 607, with a norm of however Doppler coefficients are present, albeit much lower, in the surrounding filter windows due to the slight overlap between different filter levels, which can be seen in Figure **3b.**

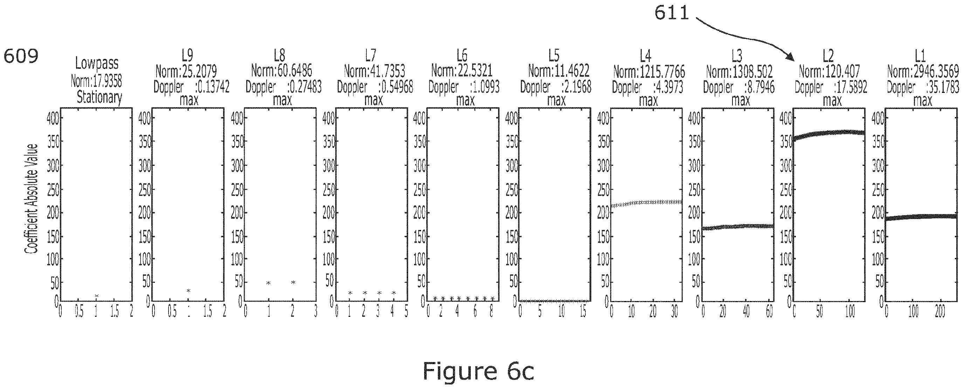

Figure **6c** shows an output of the filtering process 609 on an object travelling at 13m/s. Here the Doppler response is much higher than in the previous examples and the response is strongest in the level 2 window 611. As above, Doppler coefficients are also present in lower amounts in the surrounding filter windows.

The output of the windows in Figures **6a** to **6c** can be seen as the Doppler bins 511, 513 and 515 in Figure **5.** The data-cube of Figure **5** shows four bins with three Doppler responses resolved into them, whereas a representative data-cube according to Figure **6a** to **6c** would comprise ten bins, with Doppler responses resolved into three of them representing the three different speeds of the three objects detected.

As such the rate of multiple objects can be detected in a manner which retains significantly more information about the received signal than with classical radar processing, in a much more efficient manner.

It is also possible to reconstruct the adjusted and processed radio waves, i.e., the range and AoI processed reflected waves, from the filtered range-azimuth-images such that Time/Doppler analysis can be derived from single scan, which provides greater resolution, and which also enables an analysis of change of the Doppler during one scan, i.e. acceleration or deceleration of the object.

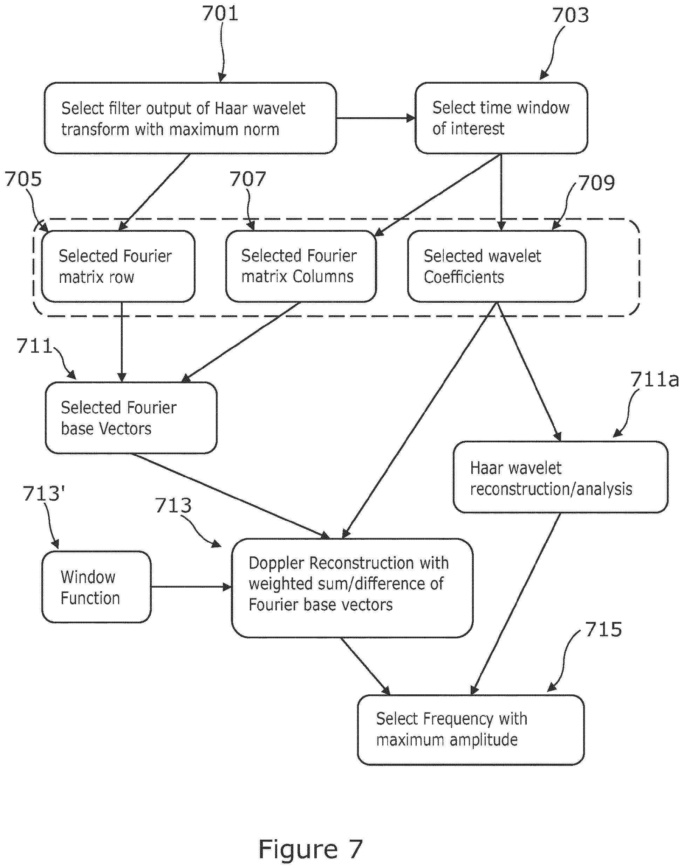

As set out in Figure **7,** for a general wavelet based filter-bank, to analyse the exact Doppler value at a particular time (such as the time window over which the filter is applied) one could first reconstruct the related Doppler coefficients for a selected time window in the selected filter level that has the maximum norm. In a next step the reconstructed signal undergoes a frequency analysis, which can be limited to the frequencies of the selected filter level. The frequencies are proportional to the Doppler values.

In case of the Haar wavelet the reconstruction and Doppler frequency analysis could be done "implicitly" as one step and avoid full matrix multiplications required for full Fourier reconstruction. As the Haar wavelet is realized by addition and subtraction, the frequency analysis can also be realized by a linear combination of addition and subtraction of columns of the Fourier matrix. The selected columns are the same where the reconstructed signal would have non-zero elements. Additionally, as mentioned before the rows are selected by the given filter level. Thus, only a portion of elements of the Fourier matrix are needed. Using this approach, we can analyse the signal locally in time and scale, in contrast to a Fourier transform, whose characteristic is nonlocal.

At step 701 of Figure **7** the filter output of the discrete Haar wavelet transform with the highest L2 norm is selected. In this context the L2 Norm is taken as the square root of the sum of the square of the wavelet coefficients in the selected filter window. As the discrete Haar wavelet transform can be applied to the signal over a variety of time windows, at step 703 a time window of interest is selected allowing time-local analysis of the signal.

From the wavelet level selection at step 701, the Fourier matrix row of interest is selected at step 705. From the selected time window, the Fourier matrix columns of interest are selected at step 707 and the wavelet coefficients corresponding to the time window are selected at step 709.

Next, for a Doppler reconstruction process using a general wavelet transform, the Fourier matrix row selected at step 705 and Fourier matrix column selected at step 707 form the selected Fourier base vectors at step 711 and are used, along with the wavelet coefficients selected at step 709, and the wavelet base functions of the selected wavelet, to carry out Doppler reconstruction with the Fourier base vectors weighted by the wavelet coefficients at step 713. In particular, reconstruction is established using the wavelet base function to apply an inverse wavelet transform to the selected wavelet coefficients. Then, the Doppler values are determined using the selected Fourier base vectors to perform a frequency analysis, using matrix multiplication or an FFT, on the inverse wavelet transformed coefficients. To convert the time window of the filtered signal to a window in the frequency domain, a window function can be applied, such as a hamming window, at step 713'.

Alternatively, for the specific example of the Haar wavelet transform, due to the shape of the Haar wavelet, the steps of applying the inverse transform and then performing frequency analysis can be efficiently combined. The frequency analysis can be carried out by simple addition and subtraction of the Fourier base vectors with the Haar coefficients, and there is no multiplication of the Fourier matrix required. This is shown as step 711a in Figure **7.**

Once the frequency analysis has been completed, the frequency with a maximum amplitude in the resolved spectrum can be selected at step 715. The frequency is proportional to the Doppler value at the time selected at step 703.

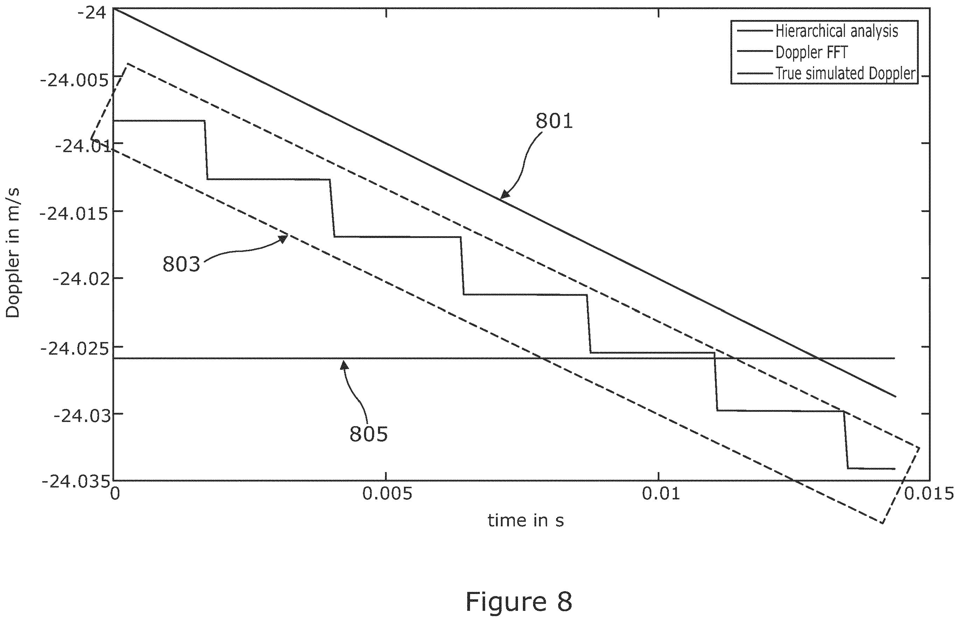

For high frequency levels (due to the high time resolution at these filter levels) the Doppler reconstruction of the wavelet transform concept can be used to calculate a rate of change of the Doppler. This is due to the time-local preservation property of the wavelet transform. Especially, for using a Haar-Wavelet, the coefficients show the progression of the phase difference over time. Figure **8** shows a comparison between an actual rate of change of Doppler for a detected object accelerating at $2m/s^2$, the rate of change which can be calculated from the wavelet transformed signal and the rate of change which can be calculated from a classically processed Doppler FFT transformed signal.

Plot 801 shows the actual Doppler value of the accelerating object. As the object is accelerating in a linear fashion, the Doppler changes at a uniform rate. The plot 803 shows the Doppler values derivable from the methods described above. Due to the time-local nature of the wavelet transform, multiple time windows in a single chirp can be specified and analysed to provide multiple consecutive Doppler values for the signal. For an accelerating object this provides an estimation of the acceleration Doppler value. As such, and using the methods described above, the acceleration of the object can be derived.

This can be compared to the plot 805 which shows signals from the same target processed using a Doppler FFT. Because the Doppler FFT discards or removes time information from the signal, only one value can be derived per radar scan or chirp. As such, detection of change of the Doppler, let alone rate of change of the Doppler is not possible.

The Doppler coefficients can also be used for further analysis of the signal. Similar to a micro-doppler analysis, one could enrich the resulting data with additional features relating to small scale movements of the object(s) detected.

It will be appreciated that the above-described illustrative embodiments relate to a method or methods of processing radar data such as radio waves received by a radar antenna array.

The methods described above may therefore be implemented in a radar unit comprising a radar antenna array and a processor for performing the methods described above.

Further, it will be appreciated that the above-described method or methods are particularly suitable for use in automotive radar applications, such as those using frequency modulated continuous wave radar. The radar unit described above may therefore be implemented in a vehicle.

Further still, it will be appreciated that the above-described method or methods are suitable for implementation using computer code. As such the above methods may be provided as a non-transient computer readable medium having computer program instructions which when executed cause a processor connected to a radar antenna array to carry out the above methods.

It will be understood that the embodiments illustrated above show applications only for the purposes of illustration. In practice, embodiments may be applied to many different configurations, the detailed embodiments being straightforward for those skilled in the art to implement.

It will be appreciated that steps of the foregoing may be carried out in different orders depending on the requirements of each specific application. That is some method steps may be taken out of order and carried out when otherwise appropriate for a specific application.

**Claims**

1. A method for processing radar signals, comprising:

receiving a plurality of radio waves reflected from at least one object and received by an antenna array;

processing each of the plurality of reflected radio waves to determine the range from the antenna array to the at least one object;

adjusting each of the plurality of processed radio waves based on a respective angle of incidence of the reflected radio wave, and the motion of the antenna array; and,

filtering the plurality of adjusted processed radio waves through a hierarchical filter bank comprising a plurality of filters to receive a plurality of output images representing the motion of the object.

2.  The method of claim 1, wherein the plurality of adjusted processed radio waves are filtered to identify a plurality of adjusted processed radio waves associated with one or more detected objects and wherein filtering the plurality of adjusted processed radio waves through a hierarchical filter bank comprises filtering the identified plurality of adjusted processed radio waves through the hierarchical filter bank.

3.  A method according to claim 1 or 2, wherein filtering the plurality of adjusted processed radio waves through a hierarchical filter bank comprises passing the plurality of adjusted processed radio waves through a hierarchy of band-pass filters of decreasing frequency and decreasing bandwidth.

4.  A method according to any previous claim, wherein filtering the plurality of adjusted processed radio waves through a hierarchical filter bank comprises applying a discrete wavelet transform to each of the plurality of adjusted processed radio waves.

5.  A method according to claim 4 wherein the discrete wavelet transform is applied using a Haar wavelet.

6.  A method according to any preceding claim wherein the hierarchical filter bank is applied to the adjusted processed radio waves for a temporal portion of the complete adjusted processed radio wave.

7.  A method according to any preceding claim wherein processing each of the plurality of reflected radio waves to determine the range value comprises applying a Fourier transform to the reflected radio waves.

8.  A method according to any preceding claim wherein adjusting each of the plurality of reflected radio waves based on the angle of incidence comprises decorrelating the transmitters of the antenna array to derive a representation of the virtual array of the antenna array and applying a second Fourier transform to each of the processed radio waves.

9.  Wherein each of the images comprises the output of a filter of the hierarchical filter bank, and wherein each filter of the hierarchical filter-bank corresponds to a particular interval of doppler values.

10. A method according to claim 9 further comprising determining the velocity of the object by determining which of the filter outputs yields a highest response value for a particular time window of the particular adjusted processed radio wave.

11. A method according to claim 10 further comprising reconstructing at least a portion of the processed adjusted radio waves from the one or more determined filter outputs and performing a frequency analysis on the reconstructed processed adjusted radio waves.

12. A method according to any previous claim comprising applying the hierarchical filter bank to at least one of the adjusted reflected radio waves for a plurality of sequential temporal periods.

13. A method according to any preceding claim comprising

1) applying the hierarchical filter bank to one of the adjusted reflected radio waves and storing the corresponding output image as a data array, and
2) applying the hierarchical filter bank to a subsequent adjusted reflected radio wave and adding the corresponding output image to the data array.

14. A electronic control unit comprising a processor configured to carry out the method according to any of claims 1 to 13.

15. A vehicle comprising the electronic control unit according to claim 14.

**16.** A non-transient computer readable medium comprising computer program instructions which when carried out by a processor cause the processor to carry out the method according to any of claims 1 to 13.

101 — Receiving, at an antenna array, a plurality of radio waves reflected from at least one object

103 — Processing each of the plurality of radio waves to determine the range from the antenna to the at least one object

105 — Processing the plurality of range processed radio waves to determine the radial velocity of the at least one object

107 — Processing the plurality of range and Doppler processed radio waves to determine the angle of incidence of the radio waves at the antenna array

Figure 1

201 — Receiving, at an antenna array, a plurality of radio waves reflected from at least one object

203 — Processing each of the plurality of reflected radio waves to determine the range from the antenna to the at least one object

205 — Adjusting each of the plurality of processed radio waves based on an azimuth value corresponding to an angle of incidence of the reflected radio wave, and the motion of the antenna array

207 — Filtering each of the plurality of adjusted processed radio waves through a hierarchical filter bank comprising a plurality of filters to receive a plurality of output images representing the motion of the object

Figure 2

Figure 3a

Figure 3b

401

Figure 4a

403

Figure 4b

Figure 5

Figure 6a

EP 4 617 722 A1

Figure 6b

Figure 6c

Figure 7

Figure 8

EP 4 617 722 A1

## EUROPEAN SEARCH REPORT

**Application Number**

EP 24 16 3051

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/408892 A1 (CHOI SUNGDO [KR]) 31 December 2020 (2020-12-31) * figures 7,11 * * paragraph [0061] * * paragraph [0066] - paragraph [0077] * * paragraph [0083] * * paragraph [0100] - paragraph [0102] * * paragraph [0111] - paragraph [0112] * * paragraph [0120] * * paragraph [0140] - paragraph [0141] * * paragraph [0152] - paragraph [0153] * ----- | 1-16 | INV. G01S13/42 G01S13/53 G01S13/931 G01S13/60 G01S13/58 |
| A | Anonymous: "Filter bank - Wikipedia", , 24 February 2024 (2024-02-24), XP093198418, Retrieved from the Internet: URL:https://en.wikipedia.org/w/index.php?title=Filter_bank&oldid=1209967788 [retrieved on 2024-08-26] * the whole document * ----- | 1-16 | |
| A | Anonymous: "Radartutorial - Doppler Filter", , 26 February 2024 (2024-02-26), XP093198530, Retrieved from the Internet: URL:https://web.archive.org/web/20240226135746/https://www.radartutorial.eu/11.coherent/Doppler-Filter.en.html [retrieved on 2024-08-26] * the whole document * ----- | 1-16 | **TECHNICAL FIELDS SEARCHED (IPC)** G01S |
| A | EP 4 024 077 A1 (APTIV TECH LTD [BB]) 6 July 2022 (2022-07-06) * figures 1,8 * * paragraph [0053] - paragraph [0056] * * paragraph [0081] - paragraph [0097] * ----- | 1-16 | |

The present search report has been drawn up for all claims

| Place of search | Date of completion of the search | Examiner |
|---|---|---|
| Munich | 28 August 2024 | Töpfer, Nils-Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 3051

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2024

| Patent document cited in search report | Publication date | Patent family member(s) | Publication date |
|---|---|---|---|
| US 2020408892 A1 | 31-12-2020 | CN 112230193 A | 15-01-2021 |
| | | EP 3757607 A1 | 30-12-2020 |
| | | KR 20210001219 A | 06-01-2021 |
| | | US 2020408892 A1 | 31-12-2020 |
| EP 4024077 A1 | 06-07-2022 | CN 114720969 A | 08-07-2022 |
| | | EP 4024077 A1 | 06-07-2022 |
| | | US 2022214441 A1 | 07-07-2022 |

For more details about this annex : see Official Journal of the European Patent Office, No. 12/82